(19) **Europäisches Patentamt / European Patent Office / Office européen des brevets**

(11) **EP 2 866 458 B1**

(12) **EUROPEAN PATENT SPECIFICATION**

(45) Date of publication and mention
of the grant of the patent:
**31.07.2019 Bulletin 2019/31**

(21) Application number: **13807805.0**

(22) Date of filing: **05.06.2013**

(51) Int Cl.:
*H04N 21/462* (2011.01)  *H04H 20/18* (2008.01)
*H04N 21/44* (2011.01)  *H04N 21/43* (2011.01)
*H04N 21/61* (2011.01)

(86) International application number:
**PCT/JP2013/003521**

(87) International publication number:
**WO 2013/190787 (27.12.2013 Gazette 2013/52)**

(54) **RECEPTION DEVICE, AND SYNCHRONOUS PROCESSING METHOD THEREFOR**

EMPFANGSVORRICHTUNG UND SYNCHRONES VERARBEITUNGSVERFAHREN DAFÜR

DISPOSITIF DE RÉCEPTION, ET PROCÉDÉ DE TRAITEMENT SYNCHRONE ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2012 JP 2012141034**

(43) Date of publication of application:
**29.04.2015 Bulletin 2015/18**

(73) Proprietor: **Saturn Licensing LLC
New York, NY 10022-3211 (US)**

(72) Inventor: **KITAZATO, Naohisa
Tokyo 108-0075 (JP)**

(74) Representative: **Witte, Weller & Partner
Patentanwälte mbB
Postfach 10 54 62
70047 Stuttgart (DE)**

(56) References cited:
**JP-A- 2005 151 434  JP-A- 2006 014 089
JP-A- 2008 252 831  JP-A- 2009 010 971
JP-A- 2012 010 009  KR-A- 20120 063 431
US-A1- 2011 069 223**

- **KINJI MATSUMURA ET AL.: 'Implementation
Study of An Extra Content Service for Broadcast
Programs using Synchronized IP Streaming'
2010 NEN THE INSTITUTE OF IMAGE
INFORMATION AND TELEVISION ENGINEERS
NENJI TAIKAI KOEN YOKOSHU, THE INSTITUTE
OF IMAGE INFORMATION AND TELEVISION
ENGINEERS 02 August 2010, pages 5 - 10,
XP008175583**
- **KINJI MATSUMURA ET AL.: 'Hybridcast no Gaiyo
to Gijutsu' NHK SCIENCE AND TECHNICAL
RESEARCH LABORATORIES R&D REPORT 15
November 2010, pages 10 - 17, XP008175577**

## Description

Technical Field

The present invention relates to: a receiver apparatus capable of receiving one of a plurality of images to be synchronized and reproduced by broadcasting, receiving the other via a network, and synchronizing and reproducing them; and a synchronization processing method thereof.

Background Art

Wider frequency band for broadcasting may not be expected in the future in the face of growing demands for wider frequency band for communication such as mobile phones in recent years. Meanwhile, a larger frequency band is required to transmit content (e.g., 3D program, high-resolution image, etc.), and it is expected that the frequency for broadcasting will not be enough. In view of this, a service, which uses broadcasting and the Internet in an integrative manner and transmits a program requiring a wider frequency band such as a 3D program or a high-resolution image, is under consideration.

For example, Patent Document 1 discloses a technology including: transmitting main broadcast audio data as a broadcast wave; transmitting multi-viewpoint image data and multi-auditory point audio data via a network; and receiving and presenting, by a receiver apparatus, the main broadcast audio data, the multi-viewpoint image data, and the multi-auditory point audio data.

Patent Document 1: Japanese Patent Application Laid-open No. 2005-159592

KR 2012-0063431 A and the corresponding EP 2651142 A2 (published after the priority date of the present application) discloses a receiving unit for receiving, through different paths, a first signal including a left-side image and a first synchronization information item, and a second signal including a right-side image and a second synchronization information item; and a signal processing unit for synchronizing and reproducing the left-side image and the right-side image using the first synchronization information item and the second synchronization information item. At least one information item, from among a content start information item, a timestamp difference between a first data item and a second data item, a frame index, a time code information item, a UTC information item, and a frame count information item, can be used as the first and second synchronization information items. Accordingly, different data can be effectively synchronized.

JP 2009/010971 A discloses a broadcast retransmitting device having a pilot-information generator generating a pilot information showing an amount of delay of a retransmitting wave to the broadcast wave, and an OFDM-modulated retransmitter generating the retransmitting wave including the pilot information. A broadcast receiving device is equipped with a delay-amount calculator to calculate the amount of delay of the retransmitting wave to the broadcast wave, a delay-amount memory to store the calculated amount of delay, and a delay-amount determinator to determine the amount of delay in STC based on the amount of delay stored in the delay-amount memory.

Summary of Invention

Problem to be solved by the Invention

When two image streams to be synchronized and reproduced are separately transmitted by broadcasting and by the Internet, if the receiving timing of one image stream is different from the receiving timing of the other image stream because of difference of characteristics of the transmitting methods, i.e., especially if a stream via the Internet is behind a broadcast stream and the buffer at the broadcast receiver side cannot absorb the amount of delay, it may be difficult to synchronize and reproduce those image streams.

In view of the above-mentioned circumstances, it is an object of the present technology to provide: a receiver apparatus capable of, when two image streams to be synchronized and reproduced are separately transmitted by broadcasting and by the Internet, successfully synchronizing and reproducing the two image streams; and a synchronization processing method thereof.

Means for solving the Problem

To solve the above-mentioned problems, according to the present technology, a receiver apparatus as defined in claim 1 is presented.

In the receiver apparatus, the adjuster is configured to adjust the criterion time based on an amount of delay of the time reference value of the communication stream behind the criterion time, the criterion time being generated based on the time reference value of the broadcast stream. As a result, it is possible to synchronize and reproduce the streams even if the communication stream is received after the broadcast stream.

The adjuster may be configured to adjust the criterion time based on the amount of delay of the time reference value of the communication stream received by the communication receiver for the first time.

Presentation time information may be added to each predetermined unit of the broadcast stream, and presentation time information is added to each predetermined unit of the communication stream, and the receiver apparatus may further include a broadcast-receiver image decoder configured to decode the broadcast stream received by the broadcast receiver such that the one image is to be presented at the timing when the presentation time information added to the broadcast stream coincides with the criterion time, a communication-receiver image decoder configured to decode the communication stream received by the communication receiver such that the other image is to be presented at the timing when the presentation time information added to the communication stream coincides with the criterion time, and an image merger configured to merge a plurality of images decoded by the broadcast-receiver image decoder and the communication-receiver image decoder.

The adjuster may be configured to adjust the criterion time based on a value obtained by adding a predetermined margin to an average value of the amounts of delay of the time reference values of the communication stream received by the communication receiver within a certain time period.

Presentation time information may be added to each predetermined unit of the broadcast stream out of the broadcast stream and the communication stream, and the receiver apparatus may further include a broadcast-receiver image decoder configured to decode the broadcast stream received by the broadcast receiver such that the one image is to be presented at the timing when the presentation time information added to the broadcast stream coincides with the criterion time, a communication-receiver image decoder configured to decode the communication stream received by the communication receiver, and an image merger configured to merge a plurality of images decoded by the broadcast-receiver image decoder and the communication-receiver image decoder.

It is supposed that, in the receiver apparatus, presentation time information is added to each predetermined unit of the broadcast stream out of the broadcast stream and the communication stream, and no presentation time information is added to the communication stream. In view of the above-mentioned supposition, the adjuster may be configured to adjust the criterion time based on a value obtained by adding a predetermined margin to an average value of the amounts of delay of the time reference values of the communication stream received by the communication receiver within a certain time period. In other words, the receiver apparatus receives and decodes the communication stream having no presentation time information again and again, and reproduces the communication stream. Because of this, an average value of the amounts of delay obtained within a certain time period is preferably used to adjust the criterion time instead of an obtained local amount of delay. Moreover, because delay of a communication stream behind a broadcast stream is fatal to synchronization and reproduction, it is effective to adjust a criterion time based on a value obtained by adding a margin to the average value.

According to another aspect of the present technology, a reception processing method is presented as defined in claim 7.

Effect of the Invention

As described above, according to the present technology, it is possible to, when two image streams to be synchronized and reproduced are separately transmitted by broadcasting and the Internet, successfully synchronize and reproduce the two image streams.

Brief Description of Drawings

[Fig. 1] A diagram showing the configuration of a system for synchronizing and transmitting a broadcast stream and a communication stream.
[Fig. 2] A timing diagram showing an operation in which a receiver apparatus according to a first embodiment of the present technology adjusts the STC and thus synchronizes a broadcast stream and a communication stream.
[Fig. 3] A block diagram showing the configuration of a receiver apparatus according to the first embodiment.
[Fig. 4] A timing diagram showing firstly selection of a broadcast channel, processing of synchronizing a broadcast stream and a communication stream, and finally the end of the synchronization processing. Modes for Carrying Out the Invention

Hereinafter, embodiments of the present technology will be described.

<First embodiment>

This embodiment relates to: a receiver apparatus configured to receive a stream (hereinafter referred to as "broadcast stream".) containing images transmitted by broadcasting and a stream (hereinafter referred to as "communication stream".) containing images transmitted by the Internet, and to synchronize and reproduce them; and its synchronization processing method.

Examples of such a system for synchronizing and transmitting a broadcast stream and a communication stream include the following.

1. 3D program

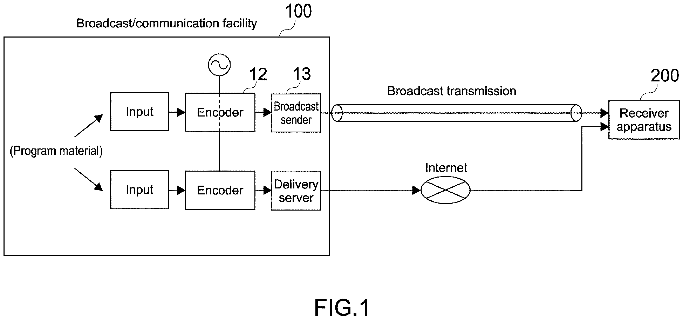

Fig. 1 is a diagram showing the configuration of a 3D program transmitting system.

The image from one viewpoint out of images from a plurality of viewpoints, which configure a 3D program, is transmitted by broadcasting, and the image from the other viewpoint is transmitted by communication. A receiver receives the two images transmitted by broadcasting and by communication, synchronizes, reproduces, and merges them, and presents a 3D image.

2. Multi-view program

A plurality of cameras take images of one object simultaneously, an obtained image of one view, i.e., a main-view, is transmitted by broadcasting, and the other images of one or more views, i.e., sub-views, are transmitted by communication. A receiver receives those images of the plurality of views, and displays the main-view image in a main-window and displays the one or more sub-view images in sub-windows at the same time. Alternatively, the receiver alternately selects one of the main-view and the sub-views as an image displayed on a main-window.

3. High-resolution program

For example, an image taken by a high-resolution camera of 4K (number of pixels: 3840x2160) is divided in quarters, whereby four-block images each having a HD size (number of pixels: 1920x1080) are obtained. Some of them are transmitted by broadcasting, and the others are transmitted by communication. A receiver receives the four-block images each having a HD size, synchronizes, reproduces, and merges them, and presents a high-resolution image having a 4K size. Alternatively, an image taken by a high-resolution camera is frequency-resolved by wavelet transform or the like, an image having a HD size having low-resolution components is transmit by broadcasting, and the rest images having high-frequency components are transmitted by communication. A receiver frequency-synchronizes the received four images each having the HD size by wavelet inverse transform or the like, and reconstructs and presents one high-resolution image.

4. Dubbing service

In a dubbing service, an image and the Japanese speech are transmitted by broadcasting, and multilingually-dubbed speech for that image is transmitted by communication. A receiver receives the image and the Japanese speech by broadcasting and receives the multilingually-dubbed speech of the image by communication at the same time, and synchronizes, reproduces, and presents the broadcast image and the dubbed-speech in response to a request from a user.

Fig. 1 is a diagram showing the configuration of the above-mentioned system for synchronizing and transmitting a broadcast stream and a communication stream.

Here, examples of a program material include a 3D program, a multi-view program, a high-resolution program, a dubbing service program, and the like. The broadcast/communication facility 100 divides a program material into a signal for broadcasting and a signal for communication. Each encoder encodes the signal for broadcasting or the signal for communication into a stream of MPEG2_TS or the like. One stream is transmitted by broadcasting, and the other stream is delivered from a delivery server by communication via the Internet. When encoding, a PCR (Program Clock Reference), i.e., a periodic time reference value, is inserted into each video TS packet. Alternatively, PCR packets each containing a PCR are added periodically.

Typically, a receiver apparatus 200 receives a broadcast stream and a communication stream of one program. Typically, the receiver apparatus 200 extracts PCRs from the received broadcast stream and PCRs from the communication stream, and sets up or calibrates the STC (System Time Clock), i.e., the criterion time of the receiver apparatus 200, based on the PCRs. The image presentation timing is generated based on the STC and PTSs (Presentation Time Stamps), i.e., presentation time information contained in image TS packets.

At this time, because of traffic changes of the network, the receiver apparatus 200 may receive a communication stream after a broadcast stream, which is to be synchronized with the communication stream and reproduced. If a communication stream is behind a broadcast stream, it is necessary to store a received broadcast stream in a buffer and to thus delay reproduction of the broadcast stream. However, typically, it is presupposed that the receiver apparatus 200 uniquely determines image stream presentation timing based on the STC, which is generated based on PCRs, and based on PTSs, i.e., time managing information of reproduction, in image TS packets. Because of this, actually, it is difficult to synchronize and reproduce a broadcast stream and a communication stream only by storing a received broadcast stream in a buffer.

In view of this, in this embodiment, there is employed a scheme in which, if the STC of the receiver apparatus is larger than the PCR inserted in the first image TS packet of a received communication stream, the difference is subtracted from the STC value for adjustment.

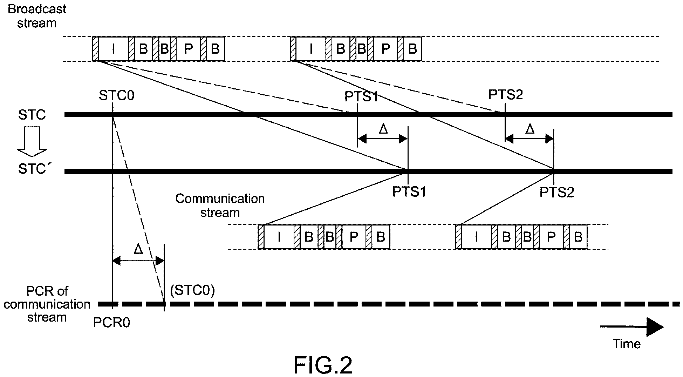

Fig. 2 is a timing diagram showing an operation in which a receiver apparatus 300 according to a first embodiment of the present technology adjusts the STC and thus synchronizes a broadcast stream and a communication stream.

1. The receiver apparatus 300 compares the PCR value obtained from the first image TS packet of a received communication stream after an instruction to synchronize and reproduce a broadcast stream and a communication stream is generated, i.e., PCR0, to the current STC value of the receiver apparatus 300, i.e., STC0, and determines if the condition STC0>PCR0 is satisfied.

2. If the above-mentioned condition is satisfied, the receiver apparatus 300 calculates the offset $\Delta$ of STC0 and PCR0 based on the following formula.

$$STC0-PCR0=\Delta...(1)$$

3. The receiver apparatus 300 adjusts the STC based on the following formula, in which the offset $\Delta$ is used.

$$STC-\Delta=STC'...(2)$$

4. The receiver apparatus 300 refers to PTSs of image TS packets of a broadcast stream, PTSs of image TS packets of the communication stream, and the STC', and controls timing of presentation of images thereof. Specifically, each of a broadcast stream and a communication stream is controlled such that an image is presented when the PTS of an image TS packet coincides with the STC'.

According to the above-mentioned process, it is possible to synchronize and reproduce a broadcast stream and a communication stream.

[Configuration of receiver apparatus]

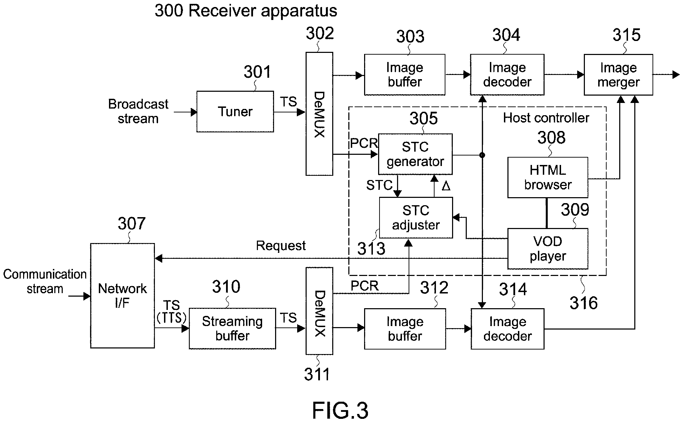

Fig. 3 is a block diagram showing the configuration of the receiver apparatus 300 of this embodiment.
The receiver apparatus 300 includes a tuner 301 (broadcast receiver), a broadcast-receiver DeMUX 302, a broadcast-receiver image buffer 303, a broadcast-receiver image decoder 304 (first image decoder), an STC generator 305 (criterion time generator), a network I/F 307 (communication receiver), an HTML browser 308, a VOD player 309, a communication-receiver streaming buffer 310, a communication-receiver DeMUX 311, a communication-receiver image buffer 312, an STC adjuster 313 (adjuster), a communication-receiver image decoder 314, and an image merger 315.
The tuner 301 receives a broadcast stream (first image stream) of a channel selected by a user, generates a transport stream (TS), and transmits the transport stream to the broadcast-receiver DeMUX 302.
The broadcast-receiver DeMUX 302 demultiplexes the transport stream, separates image TS packets therefrom, supplies the TS packets to the broadcast-receiver image buffer 303 as an image stream, extracts PCRs from the image TS packets, and supplies the PCRs to the STC generator 305.
The broadcast-receiver image buffer 303 buffers the image stream to be supplied to the broadcast-receiver image decoder 304.
The broadcast-receiver image decoder 304 decodes the image stream read from the broadcast-receiver image buffer 303, and outputs a broadcast-series image signal to the image merger 315.
The STC generator 305 generates an STC of 27 MHz with reference to the PCRs extracted from a broadcast stream, and supplies the STC to the broadcast-receiver image decoder 304, the communication-receiver image decoder 314, and the like.
Broadcast-related application software, which is operated by an HTML (HyperText Markup Language) browser 308, outputs an instruction to obtain a communication stream to the VOD (Video On Demand) player 309, whereby the VOD player 309 supplies a request. The network I/F 307 sends the request to a delivery server of the broadcast/communication facility 100 via the Internet, and receives a communication stream, which is to be synchronized with a broadcast stream and reproduced, as a response from the delivery server.
The communication-receiver streaming buffer 310 buffers the received communication stream. Here, if the image TS packets, i.e., the received communication stream, are TTS (Timestamped TS) packets containing PTSs, the communication-receiver streaming buffer 310 continuously retrieves a stored communication stream to obtain as many TS packets at an original rate as possible by using the PTSs, and supplies the communication stream to the communication-receiver DeMUX 311.
The communication-receiver DeMUX 311 separates image TS packets from a communication stream retrieved from the streaming buffer 310, and supplies the image TS packets to the communication-receiver image buffer 312 as an image stream, extracts the PCR from the front TS packet of the received image stream, and supplies the PCR to the STC adjuster 313.
The communication-receiver image buffer 312 buffers the image stream to be supplied to the communication-receiver image decoder 314.
The communication-receiver image decoder 314 decodes the image stream retrieved from the communication-receiver image buffer 312, and outputs a communication-related image signal to the image merger 315.
The image merger 315 merges the broadcast-related image signal and the communication-related image signal, generates an image signal to be presented, and outputs the image signal to a not-shown display. Here, the image signals are merged based on a method corresponding to a method of separating a program material (3D program, multi-view program, high-resolution program, dubbing service program, etc.) into broadcasting and communication.
The STC adjuster 313 compares the STC of the STC generator 305 to the PCR supplied from the communication-receiver DeMUX 311, generates data-for-adjusting-STC (offset Δ), and outputs the data-for-adjusting-STC (offset Δ) to the STC generator 305.
The STC generator 305 adjusts the STC based on the data-for-adjusting (offset Δ) from the STC adjuster 313.
A host controller 316 includes a CPU (Central Processing Unit), a ROM (Read Only Memory), a RAM (Random Access Memory), and the like. The ROM fixedly stores programs executed by the CPU and data. The programs stored in the ROM are loaded in the RAM, and the CPU executes the loaded programs.
The programs loaded in the RAM cause the host controller 316 to operate as for example the STC generator 305, the HTML browser 308, the VOD player 309, and the STC adjuster 313. Note that the STC generator 305 and the STC adjuster 313 may not be software but may be hardware. The host controller 316 is capable of receiving various kinds of instructions and data input by a user by using a not-shown remote control, for example.

[Processing of synchronizing broadcast stream and communication stream]

Next, operations from selection of a broadcast channel to synchronized reproduction of a broadcast stream and a communication stream, which are performed by the receiver apparatus 300, will be described.

Firstly, a user of the receiver apparatus 300 selects a broadcast channel by using a not-shown remote control or the like. The host controller 316 processes selected-channel information, which is input by the user and received by the remote control or the like. The host controller 316 controls the tuner 301 based on the selected-channel information input by the user.

The tuner 301 transmits a broadcast stream of the received channel to the broadcast-receiver DeMUX 302. The DeMUX 302 separates image TS packets, audio TS packets, and the other TS packets such as SI (Service Information: program array information) from the broadcast stream. The broadcast-receiver DeMUX 302 supplies the separated image TS packets, i.e., an image stream, to the broadcast-receiver image buffer 303. The broadcast-receiver image buffer 303 temporarily stores the image stream.

Moreover, the broadcast-receiver DeMUX 302 constantly extracts PCRs from the image TS packets, and supplies the PCRs to the STC generator 305. The STC generator 305 generates a STC (System Time Clock) of 27 MHz with reference to the PCRs.

The broadcast-receiver image decoder 304 decodes the image stream read from the broadcast-receiver image buffer 303, and supplies an image signal to the image merger 315. At this time, the broadcast-receiver image decoder 304 controls decoding-and-output timing of the image stream such that the image is to be presented at times when the PTSs (Program Clock Reference) of the image TS packets coincide with the STC from the STC generator 305.

The broadcast-series image signal output from the broadcast-receiver image decoder 304 is output to the image merger 315.

As an example of this operation, it is presupposed that, after a channel is selected, the receiver apparatus 300 obtains application software (broadcast-related application software) related to the channel or a program by broadcasting or communication, and executes the application software. The broadcast-related application software causes the receiver apparatus 300 to: allow a user to watch, for example, a 3D program, a multiview program, a high-resolution program, a dubbing service program, or the like, in which a broadcast stream and a communication stream are synchronized and reproduced; receive a watch-instruction from a user; and then cause the VOD player 309 to supply an instruction to obtain a communication stream.

Note that the broadcast-related application software includes, for example, HTML (Hyper Text Markup Language) documents, BML documents (Broadcast Markup Language), MHEG documents (Multimedia and Hypermedia information coding), Java (registered trademark) scripts, still-image files, moving-image files, and the like.

If the VOD player 309 receives the instruction to obtain a communication stream, the VOD player 309 causes the network I/F 307 to send a request to transmit a communication stream (communication stream to be synchronized with broadcast stream and reproduced) related to the selected channel or a program to a delivery server via the Internet, and supplies an instruction to adjust the STC to the STC adjuster 313. The STC adjuster 313 receives the instruction to adjust the STC, and then waits for a PCR to be supplied from the communication-receiver DeMUX 311.

Meanwhile, the communication-receiver streaming buffer 310 stores a communication stream transmitted from the delivery server via the network I/F 307 in response to the request. Here, the communication-receiver streaming buffer 310 stores the front image TS packet of the communication stream, reads the front image TS packet immediately after that, and supplies the front image TS packet to the communication-receiver DeMUX 311.

Note that the communication-receiver streaming buffer 310 stores a communication stream in a burst mode. If the image TS packets transmitted from the delivery server are TTS packets containing PTSs, the streaming buffer 310 continuously retrieves a stored communication stream to obtain as many TS packets at an original rate as possible by using the PTSs, and supplies the communication stream to the communication-receiver DeMUX 311.

The communication-receiver DeMUX 311 separates image TS packets from the communication stream read from the streaming buffer 310, supplies the image TS packets to the communication-receiver image buffer 312, extracts the PCR from the image TS packet obtained for the first time, and supplies the PCR to the STC adjuster 313.

Here, the value of the PCR extracted from the image TS packet obtained for the first time will be referred to as PCR0. The STC adjuster 313 obtains the PCR0, then compares the PCR0 to the value (STC0) of the STC supplied from the STC generator 305, and determines if the condition STC0>PCR0 is satisfied or not. If STC0>PCR0 is satisfied, then it means that the communication stream is received after a broadcast stream, the communication stream being to be synchronized with the broadcast stream and reproduced.

If the condition STC0>PCR0 is satisfied, the STC adjuster 313 calculates the offset $\Delta$ of STC0 and PCR0 based on the following formula.

$$STC0-PCR0=\Delta \ ...(1)$$

The value of the offset $\Delta$ is supplied to the STC generator 305.

The STC generator 305 receives the value of the offset $\Delta$, and then adjusts the STC based on the following formula.

$$STC-\Delta=STC' \ ...(2)$$

As described above, the STC is adjusted, and the STC', which is displaced by an amount of delay of the communication stream behind the broadcast stream, is set. After that, each of the broadcast-receiver image decoder 304 and the communication-receiver image decoder 314 controls the timing of presentation of each image stream based on the STC'. As a result, the broadcast stream and the communication stream are synchronized and reproduced.

Because the synchronized broadcast-related image signal and communication-related image signal are supplied to the image merger 315, an original program such as a 3D program, a multi-view program, a high-resolution program, or a dubbing service program is reconstructed accurately.

Note that if the condition STC0>PCR0 is satisfied, the STC is adjusted. To the contrary, if STC0<PCR0 or STC0=PCR0 is satisfied, it is not necessary to adjust adjust the STC.

Moreover, the STC' is corrected to the original STC simultaneously with the end of the broadcast program decoded based on the STC'.

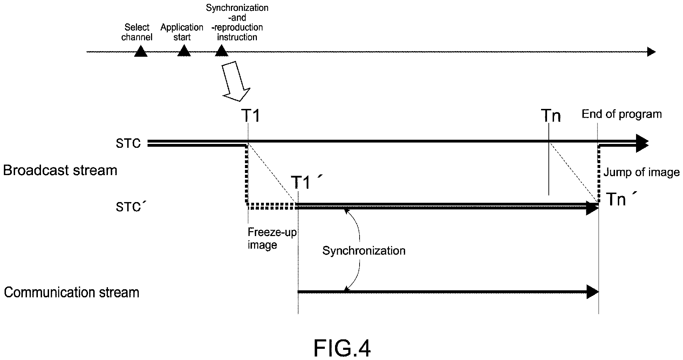

Fig. 4 is a timing diagram showing firstly selection of a broadcast channel, processing of synchronizing a broadcast stream and a communication stream, and finally the end of the synchronization processing, which have been described above.

The receiver apparatus 300 updates the STC with the STC'. As a result, the time T1 to start decoding an image stream is delayed, and the time T1' is set. A freeze-up image is displayed between T1 and T1'. Then decoding of a broadcast image stream and a communication image stream is restarted at the time T1'. After that, decoding is performed with reference to the STC' until the end of the program. When the program is finished, the STC is used again instead of the STC', an access unit whose PTS coincides with the STC is selected, and decoding is performed.

<Alternative example>

In the above-mentioned first embodiment, it is supposed that image TS packets of a communication stream are TTS packets. Alternatively, image TS packets of a communication stream may be TS packets containing no PTSs.

In this case, the series from the streaming buffer 310 to the image decoder 314 repeats the operation from receiving of a communication stream to decoding again and again irrespective of the STC. Because of this, a broadcast stream and a communication stream may sometimes not be synchronized properly only by adjusting the STC based on the difference between the PCR0, which is extracted from the image TS packet received for the first time, and the STC0.

In view of the above-mentioned supposition, it is necessary to obtain an offset $\Delta$ as an average amount of delay of a communication stream behind a broadcast stream.

For example, differences of the STC and PCRs within a certain time period from the start of receiving a communication stream are calculated, and the average value of the differences is obtained based on the following formula.

[Math 1]

$$A=1/N\times\Sigma(STCi-PCRi) \ ...(3)$$

If the value A is positive, a margin m is added to A, whereby the offset $\Delta$ is obtained.

The STC generator 305 subtracts the offset $\Delta$ from STC, and supplies the result, i.e., the adjusted STC', to the broadcast-receiver image decoder 304 and the like. Then the broadcast-receiver image decoder 304 controls the timing of presentation of the image stream based on the STC'.

TS packets containing no PTSs are originally used to transmit a medium, which does not require accurate synchronizing. So the STC is adjusted sufficiently based on the offset $\Delta$, which is obtained as the average amount of delay of a communication stream behind a broadcast stream.

Note that the present technology may employ the following configurations.

(1) A receiver apparatus, including:

a broadcast receiver capable of receiving one of a plurality of images as a broadcast stream via broadcasting, a time reference value being added to the plurality of images, the plurality of images being to be synchronized and reproduced;

a communication receiver capable of receiving the other of the plurality of images as a communication stream via a network;

a criterion time generator configured to generate criterion time based on the time reference value of the broadcast stream, the criterion time being used to generate timing to present the plurality of images; and

an adjuster configured to adjust the criterion time based on an amount of delay of the time reference value of the communication stream behind the criterion time.

(2) The receiver apparatus according to (1), in which the adjuster is configured to adjust the criterion time based on the amount of delay of the time reference value of the communication stream received by the communication receiver for the first time.

(3) The receiver apparatus according to (1) or (2), in which

presentation time information is added to each predetermined unit of the broadcast stream, and presentation time information is added to each predetermined unit of the communication stream, and

the receiver apparatus further comprises

a broadcast-receiver image decoder configured to decode the broadcast stream received by the broadcast receiver such that the one image is to be presented at the timing when the presentation time information added to the broadcast stream coincides with the criterion time,

a broadcast-receiver image decoder configured to decode the communication stream received by the communication receiver such that the other image is to be presented at the timing when the presentation time information added to the communication stream coincides with the criterion time, and

an image merger configured to merge a plurality of images decoded by the broadcast-receiver image decoder and the communication-receiver image decoder.

Description of Reference Numerals

| | |
|---|---|
| 100 | broadcast/communication facility |
| 300 | receiver apparatus |
| 301 | tuner |
| 302 | broadcast-receiver DeMUX |
| 303 | broadcast-receiver image buffer |
| 304 | broadcast-receiver image decoder |
| 305 | STC generator |
| 307 | network I/F |
| 308 | HTML browser |
| 309 | VOD player |
| 310 | streaming buffer |
| 311 | communication-receiver DeMUX |
| 312 | communication-receiver image buffer |
| 313 | STC adjuster |
| 314 | communication-receiver image decoder |
| 315 | image merger |
| 316 | host controller |

**Claims**

1. A receiver apparatus, comprising:

   a broadcast receiver (301) configured to receive one of a plurality of first images as a broadcast stream via broadcasting, wherein the plurality of first images comprises a first time reference value of a clock reference, the plurality of first images being to be synchronized and reproduced;
   a communication receiver (307) configured to receive a plurality of second images as a communication stream via the Internet, wherein the plurality of second images comprises a second time reference value of said clock reference;
   a criterion time generator (305) configured to generate criterion time based on the first time reference value, the criterion time being used to generate timing to present the plurality of first images and the plurality of second images;
   an adjuster (313) configured to adjust the criterion time based on an amount of delay of the second time reference value behind the criterion time, wherein the adjuster (313) is configured to adjust the criterion time based on the amount of delay of the second time reference value received via the Internet by the communication receiver for the first time;
   a broadcast-receiver image decoder (304) configured to decode, after the criterion time is adjusted, the broadcast stream received by the broadcast receiver such that the timing of the presentation of the broadcast stream is controlled based on the adjusted criterion time;
   a communication-receiver image decoder (314) configured to decode, after the criterion time is adjusted, the communication stream received by the communication receiver such that the timing of the presentation of the communication stream is controlled based on the adjusted criterion time; and
   an image merger (315) configured to merge a plurality of images decoded by the broadcast-receiver image decoder and the communication-receiver image decoder, wherein a first image includes low-resolution components of a high - resolution image and second images include the remaining high-frequency components of the high-resolution image.

2. The receiver apparatus according to claim 1, wherein the adjuster (313) is configured to adjust the criterion time based on a value obtained by adding a margin to an average value of the amounts of delay of the second time reference values received by the communication receiver within a certain time period.

3. The receiver apparatus according to any one of the preceding claims, wherein the image merger (315) is configured to merge a plurality of images decoded by the broadcast-receiver image decoder and the communication-receiver image decoder into the high-resolution image.

4. The receiver apparatus according to any one of the preceding claims, wherein the high-resolution image has a 4K size.

5. The receiver apparatus according to any one of the preceding claims, wherein the first images have a HD size.

6. The receiver apparatus according to any one of the preceding claims, wherein
each predetermined unit of the broadcast stream comprises presentation time information, and each predetermined unit of the communication stream comprises presentation time information, and
the broadcast-receiver image decoder (304) is configured to decode the broadcast stream received by the broadcast receiver such that a first image is to be presented at the timing when the presentation time information added to the broadcast stream coincides with the criterion time, and
the communication-receiver image decoder (314) is configured to decode the communication stream received by the communication receiver such that a second image is to be presented at the timing when the presentation time information added to the communication stream coincides with the criterion time.

7. A reception processing method, comprising:

receiving one of a plurality of first images as a broadcast stream via broadcasting, wherein the plurality of images comprises a first time reference value of a clock reference, the plurality of first images being to be synchronized and reproduced;
receiving a plurality of second images as a communication stream via the Internet, wherein the plurality of images comprises a second time reference value of said clock reference;
generating, by a criterion time generator (305), criterion time based on the first time reference value, the criterion time being used to generate timing to present the plurality of first images and the plurality of second images;
adjusting, by an adjuster (313), the criterion time based on an amount of delay of the second time reference value behind the criterion time, wherein the criterion time is adjusted based on the amount of delay of the second time reference value received via the Internet by the communication receiver for the first time;
decoding, after the criterion time is adjusted, the broadcast stream received by the broadcast receiver such that the timing of the presentation of the broadcast stream is controlled based on the adjusted criterion time;
decoding, after the criterion time is adjusted, the communication stream received by the communication receiver such that the timing of the presentation of the communication stream is controlled based on the adjusted criterion time; and
merging, by an image merger (315), a plurality of images decoded by the broadcast-receiver image decoder and the communication-receiver image decoder, wherein a first image includes low-resolution components of a high-resolution image and second images include the remaining high-frequency components of the high-resolution image.

8. The reception processing method according to claim 7, wherein
the criterion time is adjusted based on a value obtained by adding a margin to an average value of the amounts of delay of the second time reference values received by the communication receiver within a certain time period.

9. The reception processing method according to any one of claims 7 to 8, wherein a plurality of images decoded by the broadcast-receiver image decoder and the communication-receiver image decoder are merged into the high-resolution image.

10. The reception processing method according to any one of claims 7 to 9, wherein the high-resolution image has a 4K size.

11. The reception processing method according to any one of claims 7 to 10, wherein the first images have a HD size.

12. The reception processing method according to any one claims 7 to 11, wherein
each predetermined unit of the broadcast stream comprises presentation time information, and each predetermined unit of the communication stream comprises presentation time information, and
the received broadcast stream is decoded such that a first image is to be presented at the timing when the presentation time information added to the broadcast stream coincides with the criterion time, and
the received communication stream is decoded such that a second image is to be presented at the timing when the presentation time information added to the communication stream coincides with the criterion time.

13. A computer program comprising program code means for causing a computer to carry out the steps of the method as claimed in any one of claims 8 to 12 when said computer program is carried out on the computer.

**Patentansprüche**

1. Empfangsvorrichtung, umfassend:

einen Rundfunkempfänger (301), der ausgestaltet ist, eines aus einer Vielzahl von ersten Bildern als Rundfunkstrom über Rundfunk zu empfangen, wobei die Vielzahl von ersten Bildern einen ersten Zeitreferenzwert einer Taktreferenz umfasst, wobei die Vielzahl von ersten Bildern synchronisiert und reproduziert werden soll;
einen Kommunikationsempfänger (307), der ausgestaltet ist, eine Vielzahl von zweiten Bildern als Kommunikationsstrom über das Internet zu empfangen, wobei die Vielzahl von zweiten Bildern einen zweiten Zeitreferenzwert der Taktreferenz umfasst;
einen Kriteriumszeitgenerator (305), der ausgestaltet ist, Kriteriumszeit basierend auf dem ersten Zeitreferenzwert zu erzeugen, wobei die Kriteriumszeit verwendet wird, um einen Zeitpunkt zu erzeugen, um die Vielzahl der ersten Bilder und die Vielzahl der zweiten Bilder zu präsentieren;
eine Einstellvorrichtung (313), die ausgestaltet ist, die Kriteriumszeit basierend auf einem Verzögerungsbetrag des zweiten Zeitreferenzwerts hinter der Kriteriumszeit einzustellen, wobei die Einstellvorrichtung ausgestaltet ist, die Kriteriumszeit basierend auf dem Verzögerungsbetrag des zweiten Zeitreferenzwerts einzustellen, der zum ersten Mal über das Internet vom Kommunikationsempfänger empfangen wird;
einen Rundfunkempfängerbilddekodierer (304), der ausgestaltet ist, um nach dem Einstellen der Kriteriumszeit den von Rundfunkempfänger empfangenen Rundfunkstrom so zu dekodieren, dass der Zeitpunkt der Darstellung des Rundfunkstroms basierend auf der eingestellten Kriteriumszeit gesteuert wird;
einen Kommunikationsempfängerbilddekodierer (314), der ausgestaltet ist, um nach der Einstellung der Kriteriumszeit den vom Kommunikationsempfänger empfangenen Kommunikationsstrom so zu dekodieren, dass der Zeitpunkt der Präsentation des Kommunikationsstroms basierend auf der eingestellten Kriteriumszeit gesteuert wird; und
einen Bildfusionierer (315), der ausgestaltet ist, eine Vielzahl von Bildern, die durch den Rundfunkempfängerbilddekodierer und den Kommunikationsempfängerbilddekodierer dekodiert werden, zusammenzuführen, wobei ein erstes Bild niedrigauflösende Komponenten eines hochauflösenden Bildes und zweite Bilder die verbleibenden hochfrequenten Komponenten des hochauflösenden Bildes enthalten.

2. Empfangsvorrichtung nach Anspruch 1, wobei die Einstellvorrichtung (313) ausgestaltet ist, die Kriteriumszeit basierend auf einem Wert einzustellen, der durch Hinzufügen einer Marge zu einem Durchschnittswert der Verzögerungsbeträge der zweiten Zeitreferenzwerte, die vom Kommunikationsempfänger innerhalb eines bestimmten Zeitraums empfangen werden, erhalten wird.

3. Empfangsvorrichtung nach einem der vorhergehenden Ansprüche, wobei der Bildfusionierer (315) ausgestaltet ist, eine Vielzahl von Bildern, die von dem Rundfunkempfängerbilddekodierer und dem Kommunikationsempfängerbilddekodierer dekodiert werden, in das hochauflösende Bild zusammenzuführen.

4. Empfangsvorrichtung nach einem der vorhergehenden Ansprüche, wobei das hochauflösende Bild eine 4K-Größe hat.

5. Empfangsvorrichtung nach einem der vorhergehenden Ansprüche, wobei die ersten Bilder eine HD-Größe haben.

6. Empfangsvorrichtung nach einem der vorhergehenden Ansprüche, wobei
jede vorbestimmte Einheit des Rundfunkstroms und jede vorbestimmte Einheit des Kommunikationsstroms Präsentationszeitinformationen umfasst, und
der Rundfunkempfängerbilddekodierer (304) ausgestaltet ist, den vom Rundfunkempfänger empfangenen Rundfunkstrom so zu dekodieren, dass ein erstes Bild zu dem Zeitpunkt zu präsentieren ist, an dem die dem Rundfunkstrom hinzugefügten Präsentationszeitinformationen mit der Kriteriumszeit übereinstimmen, und
der Kommunikationsempfängerbilddekodierer (314) ausgestaltet ist, den vom Kommunikationsempfänger empfangenen Kommunikationsstrom so zu dekodieren, dass ein zweites Bild zu dem Zeitpunkt zu präsentieren ist, an dem die dem Kommunikationsstrom hinzugefügte Präsentationszeitinformation mit der Kriteriumszeit übereinstimmt.

7. Empfangsverarbeitungsverfahren, aufweisend:

Empfangen eines aus einer Vielzahl von ersten Bildern als Rundfunkstrom über Rundfunk, wobei die Vielzahl von ersten Bildern einen ersten Zeitreferenzwert einer Taktreferenz umfasst, wobei die Vielzahl von ersten Bildern synchronisiert und reproduziert werden soll;

Empfangen einer Vielzahl von zweiten Bildern als Kommunikationsstrom über das Internet, wobei die Vielzahl von zweiten Bildern einen zweiten Zeitreferenzwert der Taktreferenz umfasst;

Erzeugen, durch einen Kriteriumszeitgenerator (305), Kriteriumszeit basierend auf dem ersten Zeitreferenzwert, wobei die Kriteriumszeit verwendet wird, um einen Zeitpunkt zu erzeugen, um die Vielzahl der ersten Bilder und die Vielzahl der zweiten Bilder zu präsentieren;

Einstellen, durch eine Einstellvorrichtung (313), der Kriteriumszeit basierend auf einem Verzögerungsbetrag des zweiten Zeitreferenzwerts hinter der Kriteriumszeit, wobei die Kriteriumszeit basierend auf dem Verzögerungsbetrag des zweiten Zeitreferenzwerts, der zum ersten Mal über das Internet vom Kommunikationsempfänger empfangen wird, eingestellt wird;

Dekodieren, nachdem die Kriteriumszeit eingestellt wird, des vom Rundfunkempfänger empfangenen Rundfunkstroms derart, dass der Zeitpunkt der Präsentation des Rundfunkstroms basierend auf der eingestellten Kriteriumszeit gesteuert wird;

Zusammenführen, durch einen Bildfusionierer (315), einer Vielzahl von Bildern, die durch den Rundfunkempfängerbilddekodierer und den Kommunikationsempfängerbilddekodierer dekodiert werden, wobei ein erstes Bild niedrigauflösende Komponenten eines hochauflösenden Bildes und zweite Bilder die verbleibenden hochfrequenten Komponenten des hochauflösenden Bildes enthalten.

**8.** Empfangsverarbeitungsverfahren nach Anspruch 7, wobei
die Kriteriumszeit basierend auf einem Wert angepasst wird, der durch Hinzufügen einer Marge zu einem Mittelwert der Verzögerungsbeträge der zweiten Zeitreferenzwerte, die der Kommunikationsempfänger innerhalb eines bestimmten Zeitraums erhält, erhalten wird.

**9.** Empfangsverarbeitungsverfahren nach einem der Ansprüche 7 bis 8, wobei eine Vielzahl von Bildern, die durch den Rundfunkempfängerbilddekodierer und den Kommunikationsempfängerbilddekodierer dekodiert werden, in das hochauflösende Bild zusammengeführt werden.

**10.** Empfangsverarbeitungsverfahren nach einem der Ansprüche 7 bis 9, wobei das hochauflösende Bild eine 4K-Größe hat.

**11.** Empfangsverarbeitungsverfahren nach einem der Ansprüche 7 bis 10, wobei die ersten Bilder eine HD-Größe haben.

**12.** Empfangsverarbeitungsverfahren nach einem der Ansprüche 7 bis 11, wobei
jede vorbestimmte Einheit des Rundfunkstroms und jede vorbestimmte Einheit des Kommunikationsstroms Präsentationszeitinformationen umfasst, und
der empfangene Rundfunkstrom so dekodiert wird, dass ein erstes Bild zu dem Zeitpunkt zu präsentieren ist, an dem die dem Rundfunkstrom hinzugefügte Präsentationszeitinformation mit der Kriteriumszeit übereinstimmt, und
der empfangene Kommunikationsstrom so dekodiert wird, dass ein zweites Bild zu dem Zeitpunkt zu präsentieren ist, an dem die dem Kommunikationsstrom hinzugefügte Präsentationszeitinformation mit der Kriteriumszeit übereinstimmt.

**13.** Computerprogramm, umfassend Programmcodemittel, um einen Computer zu veranlassen, die Schritte des Verfahrens, wie in einem der Ansprüche 8 bis 12 beansprucht, auszuführen, wenn das Computerprogramm auf dem Computer ausgeführt wird.

**Revendications**

**1.** Appareil récepteur, comprenant :

un récepteur de radiodiffusion (301) configuré pour recevoir, par radiodiffusion, l'une d'une pluralité de premières images sous la forme d'un flux de radiodiffusion, où la pluralité de premières images comprend une première valeur de référence temporelle d'une référence d'horloge, la pluralité de premières images étant à synchroniser et à reproduire ;
un récepteur de communication (307) configuré pour recevoir une pluralité de secondes images sous la forme d'un flux de communication par l'intermédiaire d'Internet, où la pluralité de secondes images comprend une seconde valeur de référence temporelle de ladite référence d'horloge ;
un générateur de temps de critère (305) configuré pour générer un temps de critère sur la base de la première valeur de référence temporelle, le temps de critère étant utilisé pour générer un timing pour présenter la pluralité de premières images et la pluralité de secondes images ;
un dispositif de réglage (313) configuré pour régler le temps de critère sur la base d'une quantité de retard de la seconde valeur de référence temporelle derrière le temps de critère, où le dispositif de réglage (313) est configuré pour régler le temps de critère sur la base de la quantité de retard de la seconde valeur de référence temporelle reçue par le récepteur de communication, via Internet, pour la première fois ;

un décodeur d'image de récepteur de radiodiffusion (304) configuré pour décoder, après le réglage du temps de critère, le flux de radiodiffusion reçu par le récepteur de radiodiffusion de manière à ce que le timing de la présentation du flux de radiodiffusion soit contrôlé sur la base du temps de critère réglé ;

un décodeur d'image de récepteur de communication (314) configuré pour décoder, après le réglage du temps de critère, le flux de communication reçu par le récepteur de communication de manière à ce que le timing de la présentation du flux de communication soit contrôlé sur la base du temps de critère réglé ; et

un dispositif de fusion d'images (315) configuré pour fusionner une pluralité d'images décodées par le décodeur d'image de récepteur de radiodiffusion et le décodeur d'image de récepteur de communication, où une première image comprend des composantes basse résolution d'une image haute résolution et les secondes images comprennent les composantes haute fréquence restantes de l'image haute résolution.

2. Appareil récepteur selon la revendication 1, dans lequel :

le dispositif de réglage (313) est configuré pour régler le temps de critère sur la base d'une valeur obtenue en ajoutant une marge à une valeur moyenne des quantités de retard des secondes valeurs de référence temporelle reçues par le récepteur de communication pendant une certaine période de temps.

3. Appareil récepteur selon l'une quelconque des revendications précédentes, dans lequel le dispositif de fusion d'images (315) est configuré pour fusionner une pluralité d'images décodées par le décodeur d'imags de récepteur de radiodiffusion et le décodeur d'image de récepteur de communication en l'image haute résolution.

4. Appareil récepteur selon l'une quelconque des revendications précédentes, dans lequel l'image haute résolution a une taille de 4K.

5. Appareil récepteur selon l'une quelconque des revendications précédentes, dans lequel les premières images ont une taille HD.

6. Appareil récepteur selon l'une quelconque des revendications précédentes, dans lequel :

chaque unité prédéterminée du flux de radiodiffusion comprend des informations temporelles de présentation, et chaque unité prédéterminée du flux de communication comprend des informations temporelles de présentation, et

le décodeur d'image de récepteur de radiodiffusion (304) est configuré pour décoder le flux de radiodiffusion reçu par le récepteur de radiodiffusion de manière à ce qu'une première image soit présentée suivant le timing où les informations temporelles de présentation ajoutées au flux de radiodiffusion coïncident avec le temps de critère, et

le décodeur d'image de récepteur de communication (314) est configuré pour décoder le flux de communication reçu par le récepteur de communication de manière à ce qu'une seconde image soit présentée suivant le timing où les informations temporelles de présentation ajoutées au flux de communication coïncident avec le temps de critère.

7. Procédé de traitement de réception, comprenant les étapes suivantes :

recevoir, par radiodiffusion, l'une d'une pluralité de premières images sous la forme d'un flux de radiodiffusion, où la pluralité d'images comprend une première valeur de référence temporelle d'une référence d'horloge, la pluralité de premières images étant à synchroniser et à reproduire ;

recevoir une pluralité de secondes images sous la forme d'un flux de communication par l'intermédiaire d'Internet, où la pluralité d'images comprend une seconde valeur de référence temporelle de ladite référence d'horloge ;

générer, par un générateur de temps de critère (305), un temps de critère sur la base de la première valeur de référence temporelle, le temps de critère étant utilisé pour générer un timing pour présenter la pluralité de premières images et la pluralité de secondes images ;

régler, par un dispositif de réglage (313), le temps de critère sur la base d'une quantité de retard de la seconde valeur de référence temporelle derrière le temps de critère, où le temps de critère est réglé sur la base de la quantité de retard de la seconde valeur de référence temporelle reçue par le récepteur de communication, via Internet, pour la première fois ;

décoder, après le réglage du temps de critère, le flux de radiodiffusion reçu par le récepteur de radiodiffusion de manière à ce que le timing de la présentation du flux de radiodiffusion soit contrôlé sur la base du temps de critère réglé ;

décoder, après le réglage du temps de critère, le flux de communication reçu par le récepteur de communication de manière à ce que le timing de la présentation du flux de communication soit contrôlé sur la base du temps de critère réglé ; et fusionner, par un dispositif de fusion d'images (315), une pluralité d'images décodées par le décodeur d'image de récepteur de radiodiffusion et le décodeur d'image de récepteur de communication, où une première image comprend des composantes basse résolution d'une image haute résolution et les secondes images comprennent les composantes haute fréquence restantes de l'image haute résolution.

8. Procédé de traitement de réception selon la revendication 7, dans lequel :
le temps de critère est réglé sur la base d'une valeur obtenue en ajoutant une marge à une valeur moyenne des quantités de retard des secondes valeurs de référence temporelle reçues par le récepteur de communication pendant une certaine période de temps.

9. Procédé de traitement de réception selon l'une quelconque des revendications 7 et 8, dans lequel une pluralité d'images décodées par le décodeur d'image de récepteur de radiodiffusion et le décodeur d'image de récepteur de communication sont fusionnées en l'image haute résolution.

10. Procédé de traitement de réception selon l'une quelconque des revendications 7 à 9, dans lequel l'image haute résolution a une taille de 4K.

11. Procédé de traitement de réception selon l'une quelconque des revendications 7 à 10, dans lequel les premières images ont une taille HD.

12. Procédé de traitement de réception selon l'une quelconque des revendications 7 à 11, dans lequel :

chaque unité prédéterminée du flux de radiodiffusion comprend des informations temporelles de présentation, et chaque unité prédéterminée du flux de communication comprend des informations temporelles de présentation, et
le flux de radiodiffusion reçu est décodé de manière à ce qu'une première image soit présentée suivant le timing où les informations temporelles de présentation ajoutées au flux de radiodiffusion coïncident avec le temps de critère, et
le flux de communication reçu est décodé de manière à ce qu'une seconde image soit présentée suivant le timing où les informations temporelles de présentation ajoutées au flux de communication coïncident avec le temps de critère.

13. Programme informatique comprenant des moyens de code de programme pour amener un ordinateur à exécuter les étapes du procédé tel que revendiqué dans l'une quelconque des revendications 8 à 12 lorsque ledit programme informatique est exécuté sur l'ordinateur.

FIG.1

FIG.2

**300 Receiver apparatus**

FIG.3

Select channel

Application start

Synchronization -and -reproduction instruction

T1

Tn

End of program

STC

Broadcast stream

STC´

T1´

Jump of image

Tn´

Freeze-up image

Synchronization

Communication stream

FIG.4

**REFERENCES CITED IN THE DESCRIPTION**

**Patent documents cited in the description**

- JP 2005159592 A
- KR 20120063431 A
- EP 2651142 A2
- JP 2009010971 A